# EUROPÄISCHE PATENTSCHRIFT

(11) **EP 2 761 526 B1**
(45) Veröffentlichungstag und Bekanntmachung des Hinweises auf die Patenterteilung: **21.11.2018**
(21) Anmeldenummer: 12769604.5
(22) Anmeldetag: 26.09.2012
(51) Int. Cl.: G06F 21/32, G06F 21/35, G06F 21/77, G06K 19/073

(54) **RF-CHIPKARTE UND VERFAHREN ZUR AUTHENTISIERUNG**
RF CHIP CARD AND AUTHENTICATION METHOD
CARTE À PUCE RF ET PROCÉDÉ D'AUTHENTIFICATION

(30) Priorität: 26.09.2011 DE 102011114271
(43) Veröffentlichungstag der Anmeldung: 06.08.2014
(73) Patentinhaber: Bundesrepublik Deutschland, vertreten durch das Bundesministerium des Innern, vertreten durch das Bundesamt für Sicherheit in der, 53175 Bonn (DE)
(72) Erfinder: Breithaupt, Ralph, 53604 Bad Honnef (DE); Gehring, Frank, 53639 Königswinter (DE); Ullmann, Markus, 53489 Sinzig (DE)
(74) Vertreter: Schohe, Stefan
(86) Internationale Anmeldenummer: PCT/EP2012/004038
(87) Internationale Veröffentlichungsnummer: WO 2013/045085

(56) Entgegenhaltungen:
- EP-A1- 2 192 540
- US-A1- 2009 240 625

## Beschreibung

Die Erfindung betrifft eine RF-Chipkarte.

Eine gattungsgemäße RF-Chipkarte umfasst eine Antenne, die an einen Controller angeschlossen ist. Der Controller umfasst einen Speicher, in dem ein Programm abgespeichert ist. Im Falle einer RF-Chipzugangskarte mit externer PIN-Eingabe vollzieht sich die Authentisierung in zwei Stufen. Zunächst authentisiert sich die Chipkarte gegenüber dem Lesegerät, also dem Zugangsterminal. Anschließend authentisiert sich der Benutzer der Chipkarte über seine PIN-Nummer. Die PIN-Nummer wird über eine Tastatur des Terminals eingegeben. Die Eingabe der PIN-Nummer erfolgt menügesteuert. Hierzu umfasst das Terminal einen Bildschirm. Wird die eingegebene PIN-Nummer von der Chipkarte als richtig erkannt, wird der Zugang freigeschaltet. Die Eingabe der PIN-Nummer über die externe Tastatur birgt grundsätzlich die Gefahr, dass die PIN-Nummer durch einen Angreifer mitgeschnitten werden kann.

Aus der US 2008/0005579 A1 ist ein Verfahren bekannt, mit dem sich ein Benutzer gegenüber einem Bürogerät über eine einzugebende Geste authentisieren kann. Zur Authentisierung vergleicht das Bürogerät eine Unterschrift des Benutzers mit Referenzunterschriften, die zuvor im Bürogerät abgespeichert wurden.

US 2009/240625 A1 offenbart eine Verwendung von Wertmarken bei finanziellen Transaktionen. Wertmarken können beispielsweise in Form einer Karte realisiert sein. Ferner ist eine Übertragung von Daten von der Karte zu einem bestimmungsgemäßen Ziel offenbart, indem beispielsweise ein Händler ein von der Karte übertragenes elektromagnetisches Signal ausliest.

EP 2 192 540 A1 offenbart tragbare Objekte mit einer Sicherheitskomponente und einem Display, wobei das Display eine Interaktion zwischen einem Benutzer und der Sicherheitskomponente ermöglicht. Hierbei wird eine Kommunikation mit einer entfernten Bearbeitungseinheit aufgebaut und Informationen, die von der entfernten Bearbeitungseinheit eingehen, werden auf der Karte dargestellt.

Der Erfindung liegt die Aufgabe zu Grunde, eine gattungsgemäße RF-Chipkarte derart auszubilden, dass die Sicherheit gegen Angriffe erhöht ist.

Diese Aufgabe wird erfindungsgemäß durch die Merkmale des Anspruches 1 gelöst. Ferner wird die Aufgabe durch ein Verfahren mit den Merkmalen des Anspruches 6 gelöst.

Auf der RF-Chipkarte ist eine Berührungssensoranordnung zur Gestenerfassung angeordnet, die an dem Controller angeschlossen ist. Die Berührungssensoranordnung ist folglich eine Eingabevorrichtung, die in der RF-Chipkarte integriert ist. Auf der RF-Chipkarte ist ferner eine Anzeigeanordnung
angeordnet, die ebenfalls an dem Controller angeschlossen ist. Die Anzeigeanordnung erlaubt es, dass die RF-Chipkarte mit dem Benutzer interagieren kann. Die RF-Chipkarte ist derart zur On-Card-Authentisierung eines Benutzers der RF-Chipkarte ausgebildet, dass mit der Anzeigeanordnung der Benutzer aufforderbar ist, eine Authentisierungsgeste einzugeben, wenn sich die RF-Chipkarte in einem Wirkungsbereich eines Lesegerätes befindet. Mit der Berührungssensoranordnung ist eine Authentisierungsgeste des Benutzers erfassbar. Die erfasste Authentisierungsgeste ist durch eine Ausführung des Programms des Controllers der RF-Chipkarte mit Referenzgesten vergleichbar, die im Speicher des Controllers abgelegt sind.

Die erfinderische Idee besteht also darin, dass auf der RF-Chipkarte Eingabe- und Anzeigeelemente integriert sind, mit denen sich ein Benutzer einer RF-Chipkarte authentisieren kann. Durch die On-Card-Authentisierung fallen Angriffe auf externe PIN-Eingabegeräte weg, da die Eingabe einer Geste über die Berührungssensoranordnung nicht mitgeschnitten werden kann, weil dieser Vorgang On-Card auf der RF-Chipkarte selbst stattfindet.

Gegenüber einer bisherigen Realisierung über ein externes Eingabegerät mit Tastatur ermöglicht dieser Ansatz eine höhere Sicherheitsstufe, weil der Grundzeichenvorrat nicht zwingend vordefiniert ist. Entgegen einer numerischen Tastatur mit dem Grundzeichenvorrat der Ziffern von 0 bis 9 sind mit der Berührungssensoranordnung alle denkbaren Gesten nutzbar.

Durch die On-Card-Authentisierung ist sichergestellt, dass das Authentisierungsgeheimnis nicht außerhalb der RF-Chipkarte vorliegt und damit weder im Lesegerät noch in externen Datenbanken gespeichert werden muss. Dies stellt einen hohen Sicherheitsgewinn dar.

Gemäß einer Ausgestaltung wird die Berührungssensoranordnung auf der RF-Chipkarte zur Auswahl eines ersten Kartenfunktionsprogramms oder eines zweiten Kartenfunktionsprogramms auf der RF-Chipkarte eingesetzt. Sind heute Chipkarten mit einem ersten und einem zweiten Kartenfunktionsprogramm ausgerüstet, so erfolgt die Auswahl eines Kartenfunktionsprogramms auf der RF-Chipkarte bisher extern durch ein Terminal. Bisher wird, konkret ausgedrückt, durch einen expliziten Steuerbefehl über das Terminal das erste Kartenfunktionsprogramm oder das zweite Kartenfunktionsprogramm ausgewählt. Der Vorteil dieser Ausgestaltung ist nun, dass der Benutzer On-Card das erste Kartenfunktionsprogramm oder das zweite Kartenfunktionsprogramm auswählen kann. Dadurch wird die Kontrolle über den Ablauf von Programmen vom Terminal zum Benutzer verlagert. Der Benutzer kann damit das Verhalten der RF-Chipkarte für verschiedene Einsatzzwecke konfigurieren.

Erfindungsgemäß ist die RF-Chipkarte zusätzlich zur On-Card-Bedienung oder Steuerung eines Gerätes ausgebildet, derart, dass über die Anzeigeanordnung und die Berührungssensoranordnung der Benutzer mit einem Endgerät sicher interagieren kann und dass ein entsprechendes Bedienungsprogramm zur Interaktion zwischen Benutzer und Endgerät im Speicher des Controllers abgelegt ist. Alle Ausgaben des Endgerätes werden über den sicheren Kommunikationskanal an die RF-Chipkarte weitergeleitet und von der Anzeigeanordnung dargestellt. Alle Benutzereingaben auf der Berührungssensoranordnung werden von der RF-Chipkarte erfasst und interpretiert und über den sicheren Kommunikationskanal an das Endgerät gesendet. Damit stellt diese Ausgestaltung der RF-Chipkarte ein sicheres "Frontend" zur Steuerung eines beliebigen Endgerätes dar. Unter Endgeräten werden in dieser Anmeldung Geräte wie ein Zugangsterminal zu Gebäuden, ein öffentliches Terminal, ein Autoradio, ein Programmiergerät, ein Messgerät oder auch ein Bankautomat verstanden.
Der Vorteil dieser Ausgestaltung besteht darin, dass nur Inhaber einer entsprechenden RF-Chipkarte in der Lage sind, mit den Endgeräten zu interagieren. Dadurch kann ein Missbrauch, eine Manipulation sowie eine unautorisierte Nutzung der Endgeräte unterbunden werden. Die Geräte müssen dann nur eine Schnittstelle für eine kontaktlose Kommunikation mit der RF-Chipkarte zur Verfügung stellen und benötigen weder Eingabegeräte, wie eine Tastatur, noch Ausgabegeräte, wie ein Display. Eine Manipulation der Tastatur oder der Anzeigeanordnung eines Zugangsterminals sind damit ausgeschlossen. Ist das Lesegerät für die RF-Chipkarte ein öffentlich zugängliches Endgerät ohne Tastatur und Bildschirm, kann kein Angriff auf eine RF-Chipkarte über eine Manipulation am Endgerät erfolgen und man senkt zudem das Risiko von Vandalismusschäden am Endgerät.

Gemäß einer Ausgestaltung der Erfindung sind auf der Berührungssensoranordnung Anzeigemittel angeordnet. Mit diesen Anzeigemitteln können dem Benutzer ein Feedback gegeben werden, welche Geste er eingegeben hat. Ferner kann die Chipkarte über die Anzeigemittel eine Geste vorgeben. Für die RF-Chipkarte gibt es eine Einlernphase und eine Benutzungsphase. In der Einlernphase wird gemäß einer Alternative von der RF-Chipkarte eine Zufallsgeste für den Benutzer zur Authentisierung dargestellt. Im Rahmen der Einlernung gibt der Benutzer die Geste auf der Berührungssensoranordnung ein. Mit den Anzeigemitteln der RF-Chipkarte wird die von der RF-Chipkarte erkannte Geste angezeigt. Hierdurch erfolgt ein Feedback der RF-Chipkarte an den Benutzer. Alternativ kann der Benutzer seine Geste zur Authentisierung auch eigenständig wählen. Hierzu gibt er diese auf der Berührungssensoranordnung der RF-Chipkarte ein. Die RF-Chipkarte stellt mit den Anzeigemitteln die erkannte Geste wiederum dar. Hierdurch erfolgt ebenfalls ein Feedback der RF-Chipkarte an den Benutzer. Die Anzeigemittel erleichtern die Einlernphase für einen Benutzer. In der Benutzungsphase der RF-Chipkarte wird nach der Eingabe einer Authentisierungsgeste, Programmauswahlgeste oder Bedienungsgeste auf der Berührungssensoranordnung dem Benutzer ein Feedback über die Erkennung beziehungsweise Nichterkennung über die Anzeigemittel ausgegeben.

Gemäß einer Ausgestaltung der Erfindung wird die Anzeigeanordnung durch die Anzeigemittel gebildet. Der Vorteil dieser Ausgestaltung ist, dass nur eine Anzeigekomponente für den Benutzer auf der RF-Chipkarte zur Verfügung steht. Dadurch entfallen die Kosten für eine zusätzliche Anzeigekomponente.

Gemäß einer Ausgestaltung der Erfindung steht eine Anzeigeanordnung auf der RF-Chipkarte in Form eines Displays zur Verfügung. Ein Display ist die gewöhnliche Darstellungskomponente für einen Benutzer.

Ein Ausführungsbeispiel der Erfindung wird nachfolgend an Hand der Zeichnungen näher erläutert. Hierbei zeigen:
Fig.1 eine RF-Chipkarte in der Draufsicht als Schemaskizze, wobei einzelne Lagen der RF-Chipkarte illustriert sind,
Fig. 2 eine RF-Chipkarte in der Draufsicht, wobei illustriert ist, wie über Anzeigemittel auf der Berührungssensoranordnung eine Geste vorgegeben oder wie eine erkannte Geste als Feedback angezeigt wird,
Fig. 3 eine Illustration einer Authentisierungskette bezüglich einer On-Card-Geräte-Bedienung.

### Allgemeine Ausbildung einer RF-Chipkarte

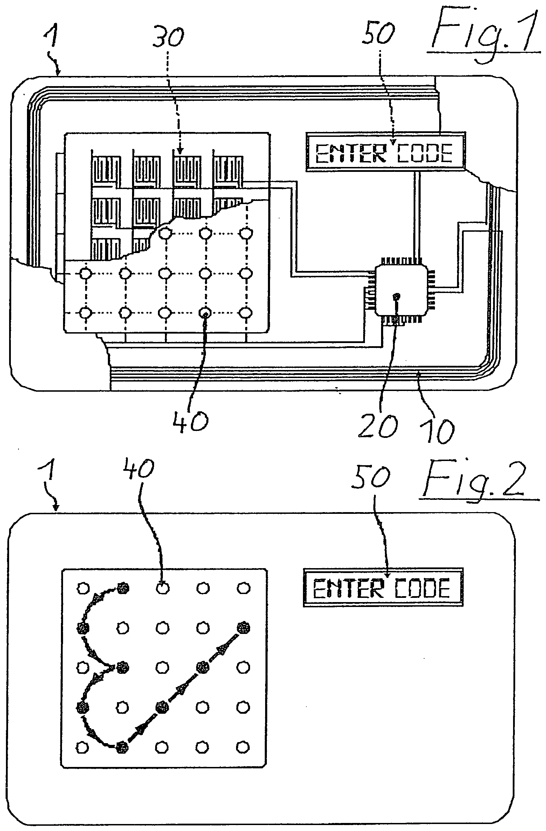

Die Fig. 1 zeigt eine RF-Chipkarte 1. Die RF-Chipkarte 1 umfasst eine Antenne 10, die an einen Controller 20 angeschlossen ist. Der Controller 20 wiederum umfasst einen Speicher, in dem ein Programm abgespeichert ist.

### Geste

In der vorliegenden Anmeldung soll der Begriff "Geste" auch eine Mehrzahl von Gesten umfassen. Ferner soll der Begriff "Geste" eine Kombination von Teilgesten umfassen.

Eine Geste ist eine menschliche Bewegung eines oder mehrerer Finger bzw. einer Hand auf der Berührungssensoranordnung. Eine Geste kann auch technisch unterstützt durch einen geführten Stift erfolgen.

Eine Geste hat immer einen Bezug zu Ort (Berührungspunkt) und Zeit.

Eine Geste oder Teilgeste kann beispielsweise sein:
- eine punktuelle Berührung einer zweidimensionalen Fläche (Tastaturnachbildung),
- eine geführte Bewegung zwischen zwei Punkten einer zweidimensionalen Fläche.

### Berührungssensoranordnung, Gestenausbildung

Auf der RF-Chipkarte 1 ist eine Berührungssensoranordnung 30 zur Gestenerfassung angeordnet ist, die an dem Controller 20 angeschlossen ist. Die Eingabe kann unmittelbar über zum Beispiel einen Zeigefinger oder mittelbar über einen Stift erfolgen. Die Berührungssensoranordnung 30 erfasst auch die Bewegungsdynamik bei komplexen Gesten und den Druckverlauf. Das Zusammenspiel zwischen Berührungssensoranordnung 30 und Controller 20 ist derart, dass die konkrete Ausprägung der Gestendetektion frei vorgebbar und konfigurierbar ist. Darüber hinaus können beliebige Gesten und Gestenkombinationen zur Authentisierung verwendet werden. Das schließt die heute übliche Verwendung einer PIN- oder Passworteingabe über alphanumerische Zeichen mit ein, eröffnet aber auch die Möglichkeit, graphische, für einen Benutzer leicht zu merkende Strichbilder als Authentisierungsmerkmal zu verwenden. Darüber hinaus kann die Berührungssensoranordnung 30 auch nur punktuelle Berührungen erfassen und damit eine Tastatur nachbilden.
Die Berührungssensoranordnung kann als 2-dimensionale Matrix folgende Sensoren aufweisen:
- Kapazitive Sensoren.
- Resistive Sensoren.
- LED-Sensoren.

### Anzeigeanordnung

Ferner ist auf der RF-Chipkarte 1 eine Anzeigeanordnung 50 angeordnet, die ebenfalls an dem Controller 20 angeschlossen ist. Die Anzeigeanordnung 50 stellt eine Feedbackkomponente für den Benutzer dar. Mit der Anzeigeanordnung 50 kann der Status der Authentisierung angezeigt werden und der Benutzer hinsichtlich seiner einzugebenden Geste geführt werden. Über die Anzeigeanordnung 50 kann die RF-Chipkarte 1 eine direkte Rückmeldung an den Benutzer abgeben, nachdem der Benutzer über die Berührungssensoranordnung 30 seine Eingabe getätigt hat. Die Anzeigeanordnung 50 kann im einfachsten Fall aus einer oder mehreren Leuchtdioden bestehen. Ein Blinken könnte zur Gesteneingabe auffordern, wogegen ein Dauerlicht eine erfolgreiche Benutzer-Authentisierung symbolisieren könnte. Handhabungsfreundlich ist eine Anzeigeanordnung, die, wie dargestellt, ein Display ist, mit dem alphanumerische Zeichen und auch Symbole darstellbar sind.

### On-Card-Authentisierung

Die RF-Chipkarte 1 ist derart zur Authentisierung eines Benutzers der RF-Chipkarte 1 ausgebildet,
- dass mit der Anzeigeanordnung 50 der Benutzer aufforderbar ist, eine Authentisierungsgeste einzugeben, wenn sich die RF-Chipkarte 1 in einem Wirkungsbereich eines Lesegerätes befindet,
- dass mit der Berührungssensoranordnung 30 eine Authentisierungsgeste des Benutzers erfassbar ist,
- dass die erfasste Authentisierungsgeste durch Ausführung des Programms mit Referenzgesten vergleichbar ist, die im Speicher des Controllers 20 abgelegt sind.

Die Schritte des Verfahrens sind:
- Platzierung der Chipkarte 1 in den Wirkungsbereich eines Lesegerätes,
- die Anzeigeanordnung 50 fordert den Benutzer der Chipkarte 1 auf, eine Authentisierungsgeste einzugeben,
- Eingabe einer Authentisierungsgeste durch den Benutzer der RF-Chipkarte 1 auf der Berührungssensoranordnung 30,
- zur Authentisierung des Benutzers wird die Authentisierungsgeste mit *Referenzgesten, die im Speicher des Controllers 20 abgelegt sind, verglichen.*

Eine Authentisierung zwischen RF-Chipkarte 1 und Lesegerät findet bevorzugt vor einer Benutzerauthentisierung statt, könnte aber auch danach stattfinden. Ausführungsbeispiele werden im Sachzusammenhang anderer Beispiele erläutert.

### On-Card-Programm-Auswahl

Die RF-Chipkarte 1 ist derart zur On-Card-Programmauswahl ausgebildet,
- dass auf der RF-Chipkarte 1 im Speicher mindestens ein erstes und ein zweites Kartenfunktionsprogramm abgespeichert ist und dass die RF-Chipkarte 1 derart zur On-Card-Programm-Auswahl ausgebildet ist,
- dass über die Berührungssensoranordnung 30 eine Programmauswahlgeste eingebbar ist und
- dass in Abhängigkeit von der erkannten Programmauswahlgeste eines der Kartenfunktionsprogramme auswählbar und aktivierbar ist.

Die Schritte des Verfahrens sind:
- Eingabe einer Programmauswahlgeste über die Berührungssensoranordnung 30,
- Auswahl und Aktivierung eines der Kartenfunktionsprogramme in Abhängigkeit von der erkannten Programmauswahlgeste.

Zunächst wird ein Beispiel einer Verwendung der Berührungssensoranordnung 30 zur Konfiguration der RF-Chipkarte beschrieben. Die Anzeigemittel 40, die später beschrieben werden, können zusätzlich mit verwendet werden.
- Neben der Authentisierung eines Benutzers zur Freischaltung einer einzigen Funktionalität der RF-Chipkarte 1 bilden die Berührungssensoranordnung 30 und die Anzeigeanordnung 50 eine Bedienungs-Schnittstelle zwischen RF-Chipkarte 1 und dem Benutzer. Der Controller 20 hält mehrere Programme mit einer jeweiligen Funktionalität vor, zwischen denen der Benutzer unter Verwendung dieser Bedienungs-Schnittstelle wählen kann. Dadurch ist eine Konfiguration der RF-Chipkarten-Funktionalität durch den Benutzer möglich. Nachfolgend wird das Beispiel konkret beschrieben.
- Der Speicher des Controllers 20 der RF-Chipkarte 1 beinhaltet zwei Kartenfunktionsprogramme, die das Kommunikationsverhalten der RF-Chipkarte 1 für zwei unterschiedliche Anwendungen bestimmen. Eine der Anwendungen stellt eine Zugangskontrolle dar, die andere umfasst die Nutzung der RF-Chipkarte 1 als Geldkarte in einer Kantine. Die beiden Anwendungen unterscheiden sich in der Höhe der Sicherheitsanforderungen und in Inhalt und Form der Kommunikation mit den jeweiligen Lesegeräten.
- Der Benutzer führt die RF-Chipkarte 1 in den Wirkungsbereich eines Lesegerätes.
- Über die Anzeigeanordnung 50 wird der Benutzer aufgefordert eine Authentisierungsgeste einzugeben.
- Nach einer erfolgreichen Authentisierung wird der Benutzer über die Anzeigeanordnung 50 aufgefordert, eine der möglichen Funktionalitäten auszuwählen: "1" für Zugang und "2" für Geldkarte.
- Der Benutzer gibt eine entsprechende Geste ein, hier eine geschriebene "1".
- Die Anzeigeanordnung 50 nennt die gewählte Funktionalität "Zugangsmodus"
- Die RF-Chipkarte 1 verhält sich im weiteren Verlauf als Zugangskontroll-Karte.

Ferner wird ein Beispiel einer Verwendung der Berührungssensoranordnung 30 zur Konfiguration der RF-Chipkarte als Mehr-Benutzer-Karte beschrieben. Die Anzeigemittel 40, die später beschrieben werden, können zusätzlich mit verwendet werden.
- In Anwendungsszenarien mit einer begrenzten Kartenanzahl und einer größeren Zahl möglicher Benutzer wird durch die oben genannte Konfigurierbarkeit der RF-Chipkarte 1 eine Verwendung von mehreren Benutzern möglich, jeweils mit eigenen Authentisierungs-Geheimnissen und benutzerabhängigen Funktionalitäten. Nachfolgend wird das Beispiel konkret beschrieben:
- Der Speicher des Controllers 20 der RF-Chipkarte 1 beinhaltet für mehrere Benutzer jeweils eigene Programme, welche die Funktionalität der RF-Chipkarte 1 bestimmen.
- Ein Benutzer führt die RF-Chipkarte 1 in den Wirkungsbereich eines Lesegerätes ein.
- Über die Anzeigeanordnung 50 wird der Benutzer aufgefordert, sich als einer der in der RF-Chipkarte gespeicherten Benutzer zu identifizieren, zum Beispiel "1" für Benutzer A und "2" für Benutzer B.
- Der Benutzer wechselt zwischen den angezeigten möglichen Identitäten mit einfachen Navigationen auf der Berührungssensoranordnung: Eine gerade Bewegung von links nach rechts bedeutet: "Nächster". Eine gerade Bewegung von rechts nach links bedeutet: "Vorheriger".
- Mit einer punktuellen Berührung wählt der Benutzer die gewünschte Identität aus.
- Über die Anzeigeanordnung 50 wird der Benutzer aufgefordert, die Authentisierungsgeste für die gewählte Identität einzugeben.
- Nach erfolgreicher Authentisierung wird das Programm mit der zugehörigen Funktionalität ausgeführt.

### On-Card-Geräte-Bedienung

Die RF-Chipkarte 1 ist zusätzlich zur On-Card-Geräte-Bedienung ausgebildet, derart,
- dass über die Anzeigeanordnung 50 und die Berührungssensoranordnung 30 der authentisierte Benutzer über Bedienungsgesten mit einem Endgerät interagieren kann, und
- dass ein entsprechendes Bedienungsprogramm zur Interaktion zwischen Benutzer und Endgerät im Speicher des Controllers 20 abgelegt ist.

Die Schritte des Verfahrens sind:
- Aufbau eines sicheren Kommunikationskanals zwischen der RF-Chipkarte 1 und dem Endgerät nach einer erfolgreichen Authentisierung des Benutzers,
- Übermittlung von Ausgaben des Endgerätes über den sicheren Kommunikationskanal an die RF-Chipkarte 1 und Darstellung der Ausgaben auf der Anzeigeanordnung 50,
- Erfassung der über die Berührungssensoranordnung 30 eingegebenen Bedienungsgesten und Weiterleitung der Benutzereingabe an das Endgerät.

Zunächst wird ein Beispiel einer Verwendung der Berührungssensoranordnung 30 zur Konfiguration der RF-Chipkarte 1 als "Frontend" für Endgeräte beschrieben. Die Anzeigemittel 40, die später beschrieben werden, können zusätzlich mit verwendet werden.
- Zur sicheren Interaktion zwischen der RF-Chipkarte 1 und dem Endgerät wird nach einer Benutzerauthentisierung gegenüber der RF-Chipkarte 1 eine gegenseitige Authentisierung zwischen der RF-Chipkarte 1 und dem Endgerät durchgeführt und ein sicherer Kanal zwischen der RF-Chipkarte 1 und dem Endgerät etabliert, damit Eingaben auf der RF-Chipkarte 1 nur zum Endgerät gesendet und Ausgaben des Endgerätes auf der Anzeigeanordnung 50 der RF-Chipkarte 1 erfolgen. Zur Stärkung des sicheren Kanals kann zusätzlich ein Schlüsseleinigungsverfahren zur Vereinbarung eines aktuellen kryptographischen Sitzungsschlüssels ausgehandelt und zur sicheren Kommunikation genutzt werden. Damit kann bei dem Endgerät auf eigene Ein- und Ausgabe-Komponenten verzichtet werden. Auf diese Weise kann eine Vielzahl von unterschiedlichsten Endgeräten mit der RF-Chipkarte 1 bedient werden. Nachfolgend wird das Beispiel konkret beschrieben:
- Ein Bankautomat stellt nur eine Funkschnittstelle zu einer RF-Chipkarte 1 sowie eine Ausgabe von Geldscheinen bereit. Damit ist der Bankautomat gut gegen Abhör-, Manipulations- und Vandalismus-Angriffen geschützt.
- Ein Benutzer führt die RF-Chipkarte 1 in den Wirkungsbereich des Lesegerätes des Bankautomaten ein.
- Über die Anzeigeanordnung 50 wird der Benutzer aufgefordert die Authentisierungsgeste einzugeben.
- Nach einer erfolgreichen Authentisierung werden die üblichen Aus- und Eingaben zur Bedienung eines Bankautomaten ausschließlich über die Berührungssensoranordnung 30 der RF-Chipkarte 1 geleistet. Beispiele hierzu sind:
   ∘ Auswahl der Funktion "Geld abheben".
   ∘ Eingabe des gewünschten Auszahlungsbetrages.
   ∘ Bestätigung der Auszahlung & Auszahlung des Betrages.
   ∘ Beendigung des Vorganges.

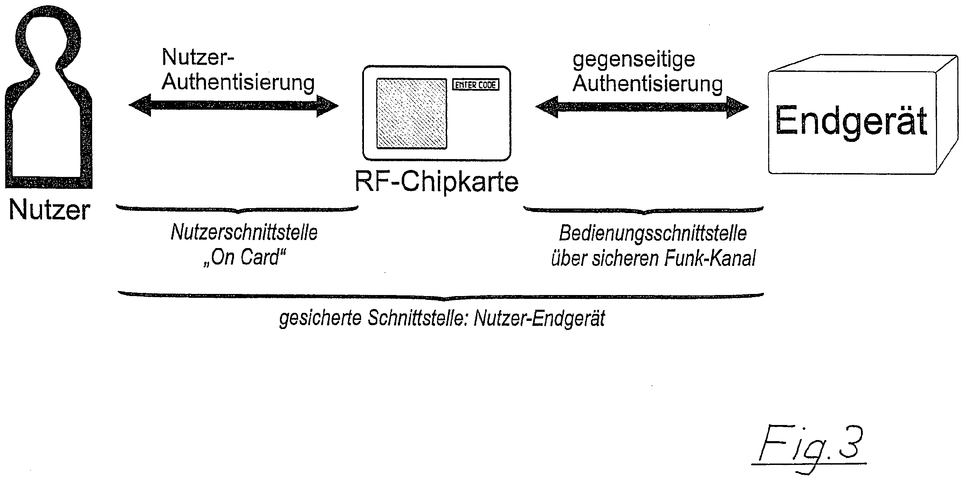

Die Fig. 3 illustriert die Authentisierungskette zwischen dem Benutzer und dem Endgerät.

### Anzeigemittel auf der Berührungssensoranordnung

Auf der Berührungssensoranordnung 30 sind Anzeigemittel 40 angeordnet, mit denen
- eine von der RF-Chipkarte 1 vorgebbare Authentisierungsgeste anzeigbar ist,
- oder eine von der RF-Chipkarte 1 erkannte Authentisierungsgeste, Programmauswahlgeste oder Bedienungsgeste wiedergebbar ist.

Der Schritt des Verfahrens ist:
- Mit den auf der Berührungssensoranordnung 30 angeordneten Anzeigemitteln wird entweder eine von der RF-Chipkarte 1 vorgebbare Authentisierungsgeste angezeigt oder es wird eine von der RF-Chipkarte 10 erkannte Authentisierungsgeste, Programmauswahlgeste oder Bedienungsgeste wiedergegeben.

Gemäß einer Alternative wird die Authentisierungsgeste von der RF-Chipkarte 1 vorgegeben. Die später vom Benutzer einzugebende Geste könnte zuvor vom Controller 20 mit Hilfe des Programms als Zufallsgeste generiert worden sein oder bereits im Rahmen der Herstellung der Chipkarte implementiert worden sein. Vergleichbar mit Passworten ist auch eine Änderung der Authentisierungsgeste möglich.

Hilfreich für den Benutzer ist es, dass auf der Berührungssensoranordnung 30 Anzeigemittel 40 angeordnet sind. Hierüber wird die einzugebende Geste in der Einlernphase dargestellt. Über die Anzeigeanordnung 50 erhält der Benutzer in der Anlernphase den Hinweis, wenn er die vorgegebene Geste richtig eingegeben hat.

In Abweichung zur vorgenannten Alternative kann die Authentisierungsgeste auch vom Benutzer vorgegeben werden. Zweckmäßig wählt der Benutzer dann ein Gestenbild, das er sich gut behalten kann.

Nachfolgend wird eine Verwendung der Anzeigemittel 40 beschrieben. Der vorgestellte Fall betrifft die Anlernphase, bei der der Benutzer eine Authentisierungsgeste vorgibt.
- Zur Steigerung der Nutzerfreundlichkeit und der Bedienungssicherheit werden die Anzeigemittel 40 dazu verwendet, dem Benutzer ein Feedback über die von ihm eingegebenen Gesten zu geben. Nach Eingabe einer Geste zeigen dazu die Anzeigemittel 40 den vom Controller 20 erkannten Gesten-Verlauf geeignet an. Illustriert ist dies in Fig. 2. Nachfolgend wird das Beispiel konkret beschrieben.
- Der Benutzer führt die RF-Chipkarte 1 ohne vorher definierte Authentisierungsgeste in den Wirkungsbereich eines Lesegerätes.
- Die RF-Chipkarte 1 fordert über die Anzeigeanordnung 50 den Benutzer auf, eine Authentisierungsgeste durch Eingabe über die Berührungssensoranordnung 30 festzulegen.
- Nach erfolgter Eingabe durch den Benutzer werden über die Anzeigemittel 40 die vom Controller 20 erkannte Geste angezeigt.
- Zur Sicherheit werden die letzten Schritte wiederholt.
- Stimmen die beiden Benutzer-Eingaben überein, so wird die Geste als Authentisierungsgeste im Speicher des Controllers 20 abgelegt.

Nachfolgend wird eine weitere Verwendung der Anzeigemittel 40 beschrieben. Vorgestellt wird die Verwendung der Berührungssensoranordnung und der Anzeigemittel als Tastatur.
- Zu den einfachsten Gesten gehören punktuelle Berührungen der Berührungssensoranordnung 30. Analog zu einer Tatstatur ordnet das Programm des Controllers 20 festgelegte Bereiche der Berührungssensoranordnung 30 bestimmten Eingaben, wie zum Beispiel Ziffern, zu. Bei einer punktuellen Berührung wird abhängig von der Berührungsposition der zugehörige Bereich ermittelt und die entsprechende Eingabe analog zum Tastendruck auf einer Tastatur erkannt.
- Da der Benutzer die Bereichseinteilung der Berührungssensoranordnung 30 ohne einen entsprechenden Aufdruck auf der RF-Chipkarte 1 nicht sehen kann, werden die Anzeigemittel 40 genutzt, um die Bereiche, wie in Fig. 1 und 2 illustriert, oder Bereichs-Zentren (nicht dargestellt) hinreichend anzuzeigen. Nachfolgend wird das Beispiel konkret beschrieben.
- Der Benutzer führt die RF-Chipkarte 1 in den Wirkungsbereich eines Lesegerätes ein.
- Über die Anzeigeanordnung 50 wird der Benutzer aufgefordert, eine PIN - Nummer einzugeben.
- Über die Anzeigemittel 40 werden die Mittelpunkte von zwölf gleichmäßig über die Berührungssensoranordnung 30 verteilten Bereichen analog zu einer Tastatur mit den Ziffern 0 bis 9 und zwei zusätzlichen Bedientasten sichtbar gemacht.
- Der Benutzer kennt die Zuordnung der Sensorbereiche zu den Ziffern und berührt nacheinander punktuell die Berührungssensoranordnung 30 nahe der gekennzeichneten Mittelpunkte der jeweiligen Bereiche, die den jeweiligen Ziffern zugeordnet sind.
- Nach jeder Eingabe blinkt der jeweilige Mittelpunkt des erkannten Bereiches zur Bestätigung kurz auf.
- Zur Beendigung der Eingabe wird eine der zusätzlichen Bedientasten-Bereiche berührt.
- Die eingegebene Nummernfolge wird vom Controller 20 mit der gespeicherten Authentisierungs-PIN verglichen und die Kartenfunktionalität in Abhängigkeit von der Richtigkeit der Eingabe freigeschaltet.

### Ausbildung der Anzeigemittel

Nachfolgend wird eine besonders geeignete Anordnung der Anzeigemittel 40 beschrieben. Wie illustriert, besteht die Berührungssensoranordnung 30 aus matrixartig angeordneten Einzelsensoren. Zwischen den matrixartig angeordneten Einzelsensoren liegen Abstandsbereiche vor. Die die Abstandsbereiche definieren Kreuzungspunkte. In jedem Kreuzungspunkt ist ein Anzeigemittel 40 angeordnet, so dass der Einfluss auf die Einzelsensoren gering ist.

### Bezugszeichenliste

1 RF-Chipkarte
10 Antenne,
20 Controller
30 Berührungssensoranordnung
40 Anzeigemittel, integriert mit der Berührungssensoranordnung
50 Anzeigeanordnung

## Patentansprüche

1. RF-Chipkarte (1) mit folgenden Merkmalen:
a) die RF-Chipkarte (1) umfasst eine Antenne (10), die an einen Controller (20) angeschlossen ist,
b) der Controller (20) umfasst einen Speicher,
c) im Speicher ist ein Programm abgespeichert,
wobei
d) auf der RF-Chipkarte (1) eine Berührungssensoranordnung (30) zur Gestenerfassung angeordnet ist, die an dem Controller (20) angeschlossen ist,
e) auf der RF-Chipkarte (1) ferner eine Anzeigeanordnung (50) angeordnet ist, die ebenfalls an dem Controller (20) angeschlossen ist, und
f) die RF-Chipkarte (1) derart zur On-Card-Authentisierung eines Benutzers gegenüber der RF-Chipkarte (1) ausgebildet ist,
g) dass mit der Anzeigeanordnung (50) der Benutzer aufforderbar ist, eine Authentisierungsgeste einzugeben, wenn sich die RF-Chipkarte (1) in einem Wirkungsbereich eines Lesegerätes befindet,
h) dass mit der Berührungssensoranordnung (30) eine Authentisierungsgeste des Benutzers erfassbar ist,
i) dass die erfasste Authentisierungsgeste durch Ausführung des Programms mit Referenzgesten vergleichbar ist, die im Speicher des Controllers (20) abgelegt sind, wobei
j) die RF-Chipkarte (1) zusätzlich zur On-Card-Geräte-Bedienung ausgebildet ist, derart,
k) dass über die Anzeigeanordnung (50) und die Berührungssensoranordnung (30) der authentisierte Benutzer über Bedienungsgesten mit einem Endgerät interagieren kann, und
1) dass ein entsprechendes Bedienungsprogramm zur Interaktion zwischen Benutzer und Endgerät im Speicher des Controllers (20) abgelegt ist, **dadurch gekennzeichnet, dass** die Interaktion mit dem Endgerät über einen sicheren Kommunikationskanal erfolgt, der nach einer erfolgreichen Authentisierung des Benutzers zwischen der RF-Chipkarte (1) und dem Endgerät aufgebaut wird, wobei Ausgaben des Endgerätes über den sicheren Kommunikationskanal an die RF-Chipkarte (1) übermittelt und auf der Anzeigeanordnung (50) dargestellt werden und die über die Berührungssensoranordnung (30) eingegebenen Bedienungsgesten erfasst und an das Endgerät weitergeleitet werden.

2. RF-Chipkarte (1) nach Anspruch 1, **dadurch gekennzeichnet,**
• **dass** auf der RF-Chipkarte im Speicher des Controllers (20) mindestens ein erstes und ein zweites Kartenfunktionsprogramm abgespeichert ist und dass die RF-Chipkarte derart zur On-Card-Programm-Auswahl ausgebildet ist,
• **dass** über die Berührungssensoranordnung (30) eine Programmauswahlgeste eingebbar ist und
• **dass** in Abhängigkeit von der erkannten Programmauswahlgeste eines der Kartenfunktionsprogramme auswählbar und aktivierbar ist.

3. RF-Chipkarte (1) nach Anspruch 1 oder 2, **dadurch gekennzeichnet, dass** auf der Berührungssensoranordnung (30) Anzeigemittel (40) angeordnet sind, mit denen
• eine von der Chipkarte vorgebbare Authentisierungsgeste anzeigbar ist,
• oder eine von der Chipkarte erkannte Authentisierungsgeste, Programmauswahlgeste oder Bedienungsgeste wiedergebbar ist.

4. RF-Chipkarte (1) nach einem der Ansprüche 1 bis 3, **dadurch gekennzeichnet, dass** die Anzeigeanordnung (50) durch die Anzeigemittel (40) gebildet ist.

5. RF-Chipkarte (1) nach einem der Ansprüche 1 bis 3, **dadurch gekennzeichnet, dass** die Anzeigeanordnung (50) ein Display ist, mit welchem zur Interaktion mit dem Benutzer geeignete Symbole, wie alphanumerische Zeichen, anzeigbar sind.

6. Verfahren zur Authentisierung eines Benutzers gegenüber einer RF-Chipkarte (1), derart,
dass die RF-Chipkarte (1) mindestens die Merkmale eines der Ansprüche 1 bis 5 aufweist und das Verfahren folgende Schritte zur On-Card-Authentisierung umfasst:
• Platzierung der Chipkarte (1) in den Wirkungsbereich eines Lesegerätes,
• die Anzeigeanordnung (50) fordert den Benutzer der Chipkarte (1) auf, eine Authentisierungsgeste einzugeben,
• Eingabe einer Authentisierungsgeste durch den Benutzer der Chipkarte (1) auf der Berührungssensoranordnung (30),
• zur Authentisierung des Benutzers wird die Authentisierungsgeste mit Referenzgesten, die im Speicher des Controllers abgelegt sind, verglichen,
**dadurch gekennzeichnet, dass** das Verfahren zusätzlich folgende Schritte zur On-Card-Geräte-Bedienung umfasst:
• Aufbau eines sicheren Kommunikationskanals zwischen der RF-Chipkarte (1) und dem Endgerät nach einer erfolgreichen Authentisierung des Benutzers,
• Übermittlung von Ausgaben des Endgerätes über den sicheren Kommunikationskanal an die RF-Chipkarte (1) und Darstellung der Ausgaben auf der Anzeigeanordnung (50),
• Erfassung der über die Berührungssensoranordnung (30) eingegebenen Bedienungsgesten und Weiterleitung der Benutzereingabe an das Endgerät.

7. Verfahren zur Authentisierung nach Anspruch 6, derart,
dass die RF-Chipkarte (1) mindestens die Merkmale des Anspruches 2 aufweist und das Verfahren zusätzlich folgende Schritte zur On-Card-Programm-Auswahl umfasst:
• Eingabe einer Programmauswahlgeste über die Berührungssensoranordnung (30),
• Auswahl und Aktivierung eines der Kartenfunktionsprogramme in Abhängigkeit von der erkannten Programmauswahlgeste.

8. Verfahren nach Anspruch 6 oder 7, derart,
dass die RF-Chipkarte (1) mindestens die Merkmale des Anspruches 3 aufweist und dass das Verfahren zusätzlich folgenden Schritt aufweist:
• mit den auf der Berührungssensoranordnung (30) angeordneten Anzeigemitteln wird entweder eine von der RF-Chipkarte (1) vorgebbare Authentisierungsgeste angezeigt oder es wird eine von der RF-Chipkarte (1) erkannte Authentisierungsgeste, Programmauswahlgeste oder Bedienungsgeste wiedergegeben.

## Claims

1. RF chip card (1) with the following features:
a) The RF chip card (1) comprises an antenna (10), which is connected to a controller (20),
b) the controller (20) comprises a store,
c) a program is stored in the store,
wherein
d) a touch sensor arrangement (30) for detecting gestures is arranged on the RF chip card (1), which is connected to the controller (20),
e) a display arrangement (50) is further arranged on the RF chip card (1), which is likewise connected to the controller (20), and
f) the RF chip card (1) is designed for the on-card authentication of a user with respect to the RF chip card (1) in such a way
g) that the display arrangement (50) can request an authentication gesture entry from the user when the RF chip card (1) is located in an active region of a reading device,
h) that an authentication gesture of the user can be detected by the touch sensor arrangement (30),
i) that by running the program the authentication gesture detected can be compared with reference gestures which are stored in the store of the controller (20),
j) wherein the RF chip card (1) is additionally configured for on-card device operation, in such a way
k) that by way of the display arrangement (50) and the touch sensor arrangement (30), the authenticated user can interact with a terminal by way of operating gestures, and
I) that a corresponding operating program for interaction between user and terminal is stored in the store of the controller (20),
**characterized in that** the interaction with the terminal takes place via a secure communication channel, which is set up between the RF chip card (1) and the terminal after a successful authentication of the user, wherein outputs from the terminal are transferred to the RF chip card (1) via the secure communication channel and are displayed on the display arrangement (50), and the operating gestures input via the touch sensor arrangement (30) are detected and forwarded to the terminal.

2. RF chip card (1) according to claim 1, **characterized in that**
- at least one first and one second card function program are stored on the RF chip card in the store of the controller (20), and
- that the RF chip card is configured to the on-card program selection in such a way
- that a program selection gesture can be input by way of the touch sensor arrangement (30), and
- that, as a dependency of the recognised program selection gesture, one of the card function programs can be selected and activated.

3. RF chip card (1) according to claim 1 or 2, **characterized in that** display means (40) are arranged on the touch sensor arrangement (30), with which
- one of the authentication gestures which can be entered on the chip card can be displayed,
- or an authentication gesture, program selection gesture, or operating gesture recognised by the chip card can be reproduced.

4. RF chip card (1) according to any one of claims 1 to 3, **characterized in that** the display arrangement (50) is formed by the display means (40).

5. RF chip card (1) according to any one of claims 1 to 3, **characterized in that** the display arrangement (50) is a display with which, for the interaction with the user, suitable symbols can be displayed, such as alphanumeric characters.

6. Method for authentication of a user with respect to the RF chip card (1), such that the RF chip card (1) exhibits at least the features of one of claims 1 to 5, and the method comprises the following steps for the on-card authentication:
- placing the chip card (1) into the effect range of a reader device,
- the display arrangement (50) requests the user of the chip card (1) to enter an authentication gesture,
- input of an authentication gesture by the user of the chip card (1) on the touch sensor arrangement (30),
- for the authentication of the user, the authentication gesture is compared with reference gestures which are stored in the store of the controller,
**characterized in that** the method additionally comprises the following steps for the on-card device operation:
- setting up a secure communication channel between the RF chip card (1) and the terminal, following a successful authentication of the user,
- transfer of outputs from the terminal via the secure communication channel to the RF chip card (1) and display of the outputs on the display arrangement (50),
- detection of the operating gestures input via the touch sensor arrangement (30) and forwarding of the user input to the terminal.

7. Method for authentication according to claim 6, in such a way
that the RF chip card (1) exhibits at least the features of claim 2, and the method additionally comprises the following steps for the on-card program selection:
- input of a program selection gesture via the touch sensor arrangement (30),
selection and activation of one of the card function programs as a dependency of the program selection gesture which is recognised.

8. Method according to claim 6 or 7, in such a way
that the RF chip card (1) exhibits at least the features of claim 3, and the method additionally comprises the following steps:
- with the display means arranged on the touch sensor arrangement (30), either an authentication gesture which can be predetermined by the RF chip card (1) is displayed, or an authentication gesture, program selection gesture, or operating gesture, recognised by the RF chip card (1), is reproduced.

## Revendications

1. Carte à puce RF (1) avec les caractéristiques suivantes :
a) la carte à puce RF (1) comprend une antenne (10) qui est raccordée à un contrôleur (20),
b) le contrôleur (20) comprend une mémoire,
c) dans la mémoire est enregistré un programme,
d) sur la carte à puce RF (1) étant disposé un dispositif à capteur de contact (30) pour la détection de gestes, qui est raccordé au contrôleur (20),
e) sur la carte à puce RF (1) étant en outre disposé un dispositif d'affichage (50) qui est également raccordé au contrôleur (20) et
f) la carte à puce RF (1) étant conçue pour l'authentification On-Card d'un utilisateur vis-à-vis de la carte à puce RF (1),
g) de façon à ce que le dispositif d'affichage (50) demande à l'utilisateur d'entrer un geste d'authentification lorsque la carte à puce RF (1) se trouve dans un domaine d'action d'un appareil de lecture,
h) de façon à ce que le dispositif à capteur de contact (30) détecte un geste d'authentification de l'utilisateur,
i) de façon à ce que le geste d'authentification détecté puisse être comparé, par l'exécution du programme, avec des gestes de référence enregistrés dans la mémoire du contrôleur (20),
j) la carte à puce RF (1) étant en outre conçue pour commande d'appareils On-Card,
k) de façon à ce que le dispositif d'affichage (50) et le dispositif à capteur de contact permettent à l'utilisateur authentifié d'interagir par des gestes de commande avec un terminal et
l) de façon à ce qu'un programme de commande correspondant est enregistré dans la mémoire du contrôleur (20) pour l'interaction entre l'utilisateur et le terminal,
**caractérisée en ce que**
l'interaction avec le terminal a lieu par l'intermédiaire d'un canal de communication sécurisé qui est établi entre la carte à puce RF (1) et le terminal après une authentification réussie de l'utilisateur, les sorties du terminal étant transmises par l'intermédiaire du canal de communication sécurisé à la carte à puce RF (1) et affichées sur le dispositif d'affichage (50) et les gestes de commandes entrés sont détectés par l'intermédiaire du dispositif à capteur de contact (30) et transférés au terminal.

2. Carte à puce RF (1) selon la revendication 1, **caractérisée en ce que**
• sur la carte à puce RF, dans la mémoire du contrôleur (20), est enregistré au moins un premier et un deuxième programmes fonctionnels de la carte et **en ce que** la carte à puce RF est conçue pour une sélection de programme On-Card,
• de façon à ce que le dispositif à capteur de contact (30) permette d'entrer un geste de sélection de programme et
• de façon à ce que, en fonction du geste de sélection de programme détecté, un des programmes fonctionnels de la carte peut être sélectionné et activé.

3. Carte à puce RF (1) selon la revendication 1 ou 2, **caractérisée en ce que**, sur le dispositif à capteur de contact (30) sont disposés des moyens d'affichage (40) permettant
• d'afficher un geste d'authentification prédéterminé par la carte à puce,
• de reproduire un geste d'authentification, un geste de sélection de programme ou un geste de commande détecté par la carte à puce.

4. Carte à puce RF (1) selon l'une des revendications 1 à 3, **caractérisée en ce que** le dispositif d'affichage (50) est constitué des moyens d'affichage (40).

5. Carte à puce RF (1) selon l'une des revendications 1 à 3, **caractérisée en ce que** le dispositif d'affichage (50) est un écran permettant d'afficher des symboles adaptés à une interaction avec l'utilisateur, comme des caractères alphanumériques.

6. Procédé d'authentification d'un utilisateur vis-à-vis d'une carte à puce RF (1),
de façon à ce que la carte à puce RF (1) présente au moins les caractéristiques d'une des revendications 1 à 5 et à ce que le procédé comprenne les étapes suivantes pour une authentification On-Card :
• disposition de la carte à puce (1) dans le domaine d'action d'un appareil de lecture,
• le dispositif d'affichage (50) demande à l'utilisateur de la carte à puce (1) d'entrer un geste d'authentification,
• entrée d'un geste d'authentification par l'utilisateur de la carte à puce (1) sur le dispositif à capteur de contact (30),
• pour l'authentification de l'utilisateur, le geste d'authentification est comparé avec des gestes de référence enregistrés dans la mémoire du contrôleur, **caractérisé en ce que** le procédé comprend en outre les étapes suivantes pour
une commande On-Card :
• établissement d'un canal de communication sécurisé entre la carte à puce RF (1) et le terminal après une authentification réussie de l'utilisateur,
• transmission des sorties du terminal par l'intermédiaire du canal de communication sécurisé à la carte à puce RF (1) et représentation des sorties sur le dispositif d'affichage (50),
• détection des gestes de commande entrés par l'intermédiaire du dispositif à capteur de contact (30) et transfert de l'entrée de l'utilisateur au terminal.

7. Procédé d'authentification selon la revendication 6,
de façon à ce que la carte à puce RF (1) présente au moins les caractéristiques de la revendication 2 et à ce que le procédé comprenne en outre les étapes suivantes pour une sélection de programme On-Card :
• entrée d'un geste de sélection de programme par l'intermédiaire du dispositif à capteur de contact (30),
• sélection et activation d'un des programmes fonctionnels de la carte en fonction du geste de sélection de programme détecté.

8. Procédé selon la revendication 6 ou 7,
de façon à ce que la carte à puce RF (1) présente au moins les caractéristiques de la revendication 3 et à ce que le procédé comprenne en outre les étapes suivantes :
• avec les moyens d'affichage disposés sur le dispositif à capteur de contact (30), soit un geste d'authentification prédéterminé par la carte à puce RF (1) est affiché soit un geste d'authentification, un geste de sélection de programme ou un geste de commande détecté par la carte à puce RF (1) est reproduit.
